# EUROPEAN PATENT APPLICATION

(11) **EP 3 015 911 A1**
(43) Date of publication of application: **04.05.2016**
(21) Application number: 15191867.9
(22) Date of filing: 28.10.2015
(51) Int. Cl.: G02F 1/1333, G02F 1/1335, G02F 1/1343

(54) **LIQUID CRYSTAL DISPLAY HAVING IMPROVED TRANSMITTANCE**

(30) Priority: 30.10.2014 KR 20140149350
(71) Applicant: Samsung Display Co., Ltd., Gyeonggi-do (KR)
(72) Inventor: Bae, Kwang Soo, 152-1202 Suwon-si, Gyeonggi-do (KR); Kim, Duk Young, No. 205, 114-8 Hwaseong-si, Gyeonggi-do (KR); Yun, Hae Ju, No. 702 Hwaseong-si, Gyeonggi-do (KR); Song, Dae Ho, 880-2602 Gyeonggi-do (KR); Kim, Yong Seok, 109-902 Seoul (KR)
(74) Representative: Dr. Weitzel & Partner

(57) **Abstract**

An exemplary embodiment of the present invention provides a liquid crystal display with microcavities including: a first pixel, a second pixel, and a third pixel each configured to display a different color; and pixel electrodes disposed in each of the first pixel, the second pixel, and the third pixel, wherein each pixel electrode includes a plurality of branch electrodes, a width of a third branch electrode disposed in the third pixel is smaller than that of a second branch electrode disposed in the second pixel, and the third pixel is configured to display blue.

## Description

### BACKGROUND

### (a) Field

Embodiments of the present invention relate generally to liquid crystal displays. More specifically, embodiments of the present invention relate to a liquid crystal display having improved transmittance.

### (b) Description of the Related Art

A liquid crystal display is one type of flat panel display device that has found wide acceptance. A typical liquid crystal display includes two display panels, wherein field generating electrodes such as a pixel electrode and a common electrode are formed with a liquid crystal layer interposed therebetween.

The liquid crystal display generates an electric field in a liquid crystal layer by applying a voltage to the field generating electrodes to determine orientations of liquid crystal molecules of the liquid crystal layer and to thereby control polarization of incident light, thus displaying an image.

The liquid crystal display may be designed such that a cell gap of a blue pixel is lower than that of a green pixel, to accomplish color visibility. However, in the case of increasing a thickness of a blue color filter to reduce the cell gap of the blue pixel, transmittance loss may be generated due to absorptance of a material of the color filter.

The above information disclosed in this Background section is only for enhancement of understanding of the background of the invention and therefore it may contain information that does not form the prior art that is already known in this country to a person of ordinary skill in the art.

### SUMMARY

The present invention has been made in an effort to provide a liquid crystal display having advantages of being capable of improving transmittance of a blue pixel that has the same cell gap as other-colored pixels in the display.

An exemplary embodiment of the present invention provides a liquid crystal display including: a first pixel, a second pixel, and a third pixel each configured to display a different color; and pixel electrodes disposed in each of the first pixel, the second pixel, and the third pixel, wherein each pixel electrode includes a plurality of branch electrodes, a width of a third branch electrode disposed in the third pixel is smaller than that of a second branch electrode disposed in the second pixel, and the third pixel is configured to display blue.

The number of the branch electrodes disposed in the third pixel may be greater than that of the branch electrodes disposed in either the first pixel or the second pixel.

The liquid crystal display may further include a data line disposed between adjacent pixels of the first pixel, the second pixel, and the third pixel, and a shortest distance between the third pixel and a data line adjacent thereto may be shorter than that between the second pixel and a data line adjacent thereto.

A width of the third branch electrode may be less than a width of a first branch electrode disposed in the first pixel, and the width of the first branch electrode may be less than a width of the second branch electrode, wherein the first pixel and the second pixel are configured to respectively display red and green.

A distance between adjacent ones of the first branch electrodes may be substantially the same as a distance between adjacent ones of the second branch electrodes, and substantially the same as a distance between adjacent ones of the third branch electrodes.

The width of the first branch electrode disposed in the first pixel may be equal to or less than that of the second branch electrode disposed in the second pixel.

The liquid crystal display may further include a common electrode wherein an insulating layer is disposed between the pixel electrodes and the common electrode.

The common electrode may be substantially planar.

The common electrode may be disposed to overlap the branch electrodes.

Cell gaps of the liquid crystal layer may be substantially the same in each of the first pixel, the second pixel, and the third pixel. A cell gap might also be called height of a cell containing the liquid crystal material respective the liquid crystal molecules. Such a cell especially is provided by a so-called microcavity.

An exemplary embodiment of the present invention provides a liquid crystal display including: a substrate configured to include a first pixel, a second pixel, and a third pixel; pixel electrodes disposed in each of the first pixel, the second pixel, and the third pixel; and a roof layer, which also may be called a cover layer, disposed to face the pixel electrodes, wherein a plurality of microcavities are formed between the pixel electrodes and the roof layer, the microcavities each having a liquid crystal layer including a liquid crystal material, the pixel electrodes each include a plurality of branch electrodes, a width of a third branch electrode disposed in the third pixel is smaller than that of a second branch electrode disposed in the second pixel.

The number of the branch electrodes disposed in the third pixel may be greater than that of the branch electrodes disposed in either the first pixel or the second pixel.

The liquid crystal display may further include a data line disposed between adjacent pixels of the first pixel, the second pixel, and the third pixel, and a shortest distance between the third pixel and the data line adjacent thereto may be shorter than that between the second pixel and the data line adjacent thereto.

A width of the third branch electrode may be less than a width of a first branch electrode disposed in the first pixel, and the width of the first branch electrode may be less than a width of the second branch electrode, wherein the first pixel, the second pixel, and the third pixel are configured to respectively display red, green, and blue.

A distance between adjacent ones of the first branch electrodes is substantially the same as a distance between adjacent ones of the second branch electrodes, and may be substantially the same as a distance between adjacent ones of the third branch electrodes.

The roof layer may include color filters.

Adjacent microcavities may be separated from each other by a partition portion, and the partition portion is formed by a color filter of a single color.

The partition portion may be disposed to overlap a data line.

The width of a first branch electrode disposed in the first pixel may be equal to or less than that of the second branch electrode disposed in the second pixel.

Adjacent microcavities may be partitioned by a partition portion, and the partition portion may be formed by the roof layer.

The liquid crystal display may further include a common electrode, wherein an insulating layer is disposed between the pixel electrode and the common electrode.

The common electrode may be substantially planar, and may be disposed to overlap the branch electrodes.

Cell gaps of the liquid crystal layer may be substantially the same in each of the first pixel, the second pixel, and the third pixel.

According to the exemplary embodiments of the present invention, it is possible to control transmittance of the blue pixel to correspond to transmittance of the red or green pixel by adjusting the width of the branch electrodes disposed in each pixel, thereby improving color visibility.

### BRIEF DESCRIPTION OF THE DRAWINGS

The above and other objects, features and advantages of the present invention will be more apparent from the following detailed description taken in conjunction with the accompanying drawings, in which:
FIG. 1 is a top plan view showing a liquid crystal display according to an exemplary embodiment of the present invention;
FIG. 2 is a cross-sectional view taken along the line II-II of FIG. 1;
FIG. 3 is a cross-sectional view taken along the line III-III of FIG. 1;
FIG. 4 is a schematic perspective view illustrating a microcavity of a liquid crystal display according to an exemplary embodiment of the present invention;
FIG. 5 is a top plan view illustrating a color filter and a partition portion in a liquid crystal display according to an exemplary embodiment of the present invention;
FIG. 6 is a cross-sectional view taken along the line VI-VI of FIG. 5;
FIG. 7 is a top plan view illustrating a part of the liquid crystal display of FIG. 1;
FIG. 8 is a graph illustrating transmittance of a red pixel, a green pixel, and a blue pixel according to a voltage in a conventional liquid crystal display;
FIG. 9 is a graph illustrating transmittance of a red pixel, a green pixel, and a blue pixel according to a voltage in a liquid crystal display according to an exemplary embodiment of the present invention; and
FIG. 10 is a graph illustrating transmittance of a red pixel, a green pixel, and a blue pixel according to a voltage in a liquid crystal display according to an exemplary embodiment of the present invention.

The Figures are not to scale.

### DETAILED DESCRIPTION OF THE EMBODIMENTS

Exemplary embodiments of the present invention will now be described with reference to the accompanying drawings. As those skilled in the art would realize, the described embodiments may be modified in various different ways, all without departing from the scope of the present invention.

In the drawings, the thickness of layers, films, panels, regions, etc., are exaggerated for clarity. It will be understood that when a layer is referred to as being "on" another layer or substrate, it can be directly on the other layer or substrate, or intervening layers or substrates may also be present. Like reference numerals designate like elements throughout the specification.

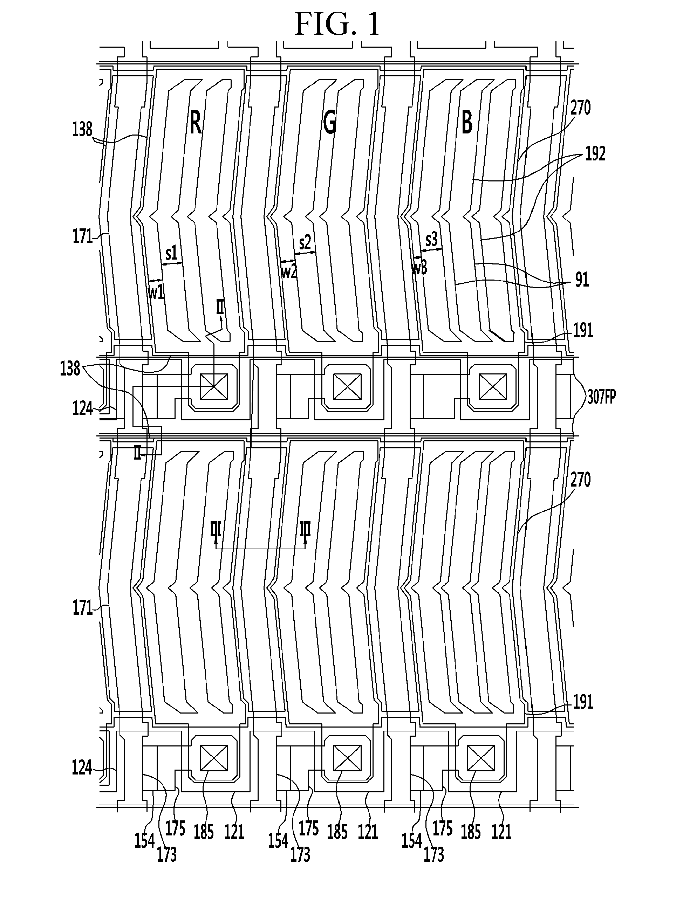

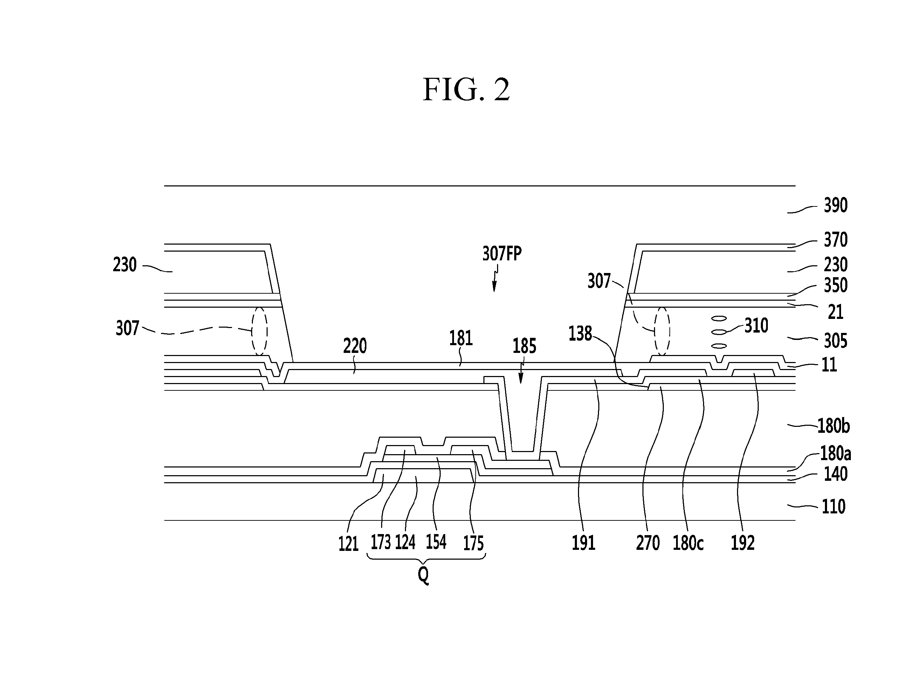

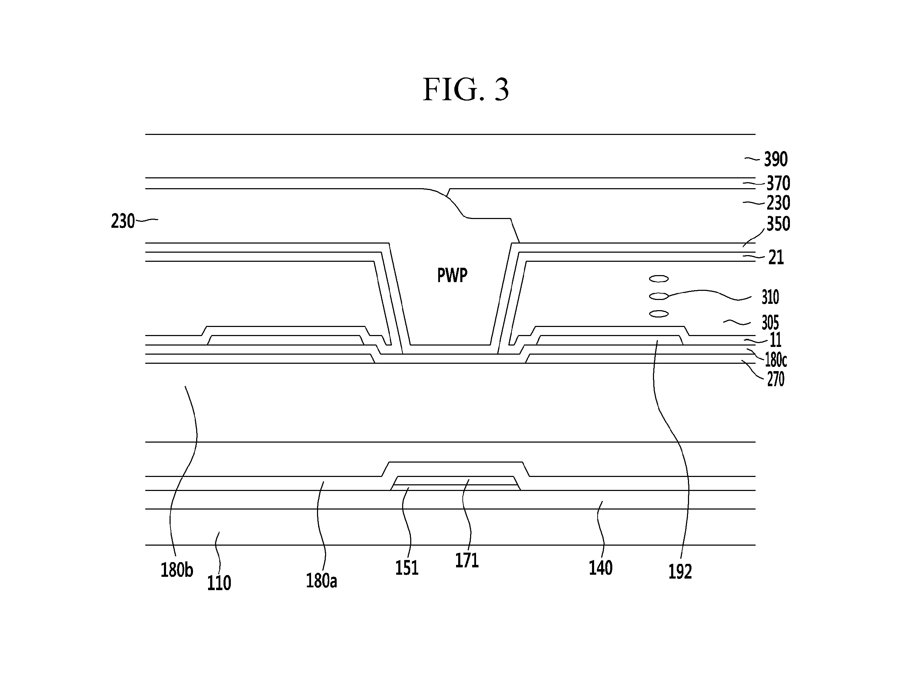

FIG. 1 is a top plan view showing a liquid crystal display according to an exemplary embodiment of the present invention. FIG. 2 is a cross-sectional view taken along the line II-II of FIG. 1. FIG. 3 is a cross-sectional view taken along the line III-III of FIG. 1.

FIG. 1 illustrates a 3 * 3 pixel portion of a plurality of pixels included in a liquid crystal display according to an exemplary embodiment of the present invention. This 3 * 3 pixel area may be repeatedly arranged up/down and right/left, and/or in any other desired direction.

Referring to FIG. 1 to FIG. 3, a gate line 121 and a storage electrode line (not shown) are formed on a substrate 110 made of transparent glass or plastic. The gate line 121 includes a gate electrode 124, and has a wide end portion (not shown) for connection with another layer or an external driving circuit. The storage electrode line is mainly extended in a horizontal direction (in the view of FIG. 1), and transfers a predetermined voltage such as a common voltage Vcom.

The gate line 121 may be made of an aluminum-based metal such as aluminum (Al) or an aluminum alloy, a silver-based metal such as silver (Ag) or a silver alloy, a copper-based metal such as copper (Cu) or a copper alloy, a molybdenum-based metal such as molybdenum (Mo) or a molybdenum alloy, chromium (Cr), tantalum (Ta), titanium (Ti), and/or the like. Alternatively, the gate line 121 may have a multilayer structure including at least two conductive layers having different physical properties.

A gate insulating layer 140 that is made of a silicon nitride (SiNx), a silicon oxide (SiOx), or the like is formed on the gate line 121 and the storage electrode line. A semiconductor layer 151 disposed under a data line 171 and a semiconductor layer 154 disposed under a source/drain electrode and corresponding to a channel region of a thin film transistor Q are formed on the gate insulating layer 140.

A plurality of ohmic contacts may be formed between the semiconductor layer 151 and the data line 171, and between the semiconductor layer 154 and the source/drain electrode, and are omitted in the drawings. Such ohmic contacts are known.

Data conductors including a source electrode 173, the data line 171 connected to the source electrode 173, and a drain electrode 175 are formed on the semiconductor layers 151 and 154 and the gate insulating layer 140. The data line 171 includes a wide end portion (not illustrated) for connection with another layer or an external driving circuit. The data line 171 transfers a data signal, and mainly extends in a vertical direction (in the view of FIG. 1) to cross the gate line 121.

The source electrode 173 is a portion or extension of the data line 171, and is disposed on the same line as the data line 171. The drain electrode 175 is formed so as to extend generally in parallel with the source electrode 173. Accordingly, the drain electrode 175 is parallel with part of the data line 171. Each structure of the source electrode 173 and the drain electrode 175 may be sized and shaped in any desired manner.

The gate electrode 124, the source electrode 173, and the drain electrode 175 collectively form a thin film transistor Q along with the semiconductor layer 154, and the channel of the thin film transistor Q is formed in the exposed portion of the semiconductor layer between the source electrode 173 and the drain electrode 175.

The data line 171 and the drain electrode 175 may be made of a refractory metal such as molybdenum, chromium, tantalum, and titanium, or an alloy thereof, and may have a multilayered structure including a refractory metal layer (not illustrated) and a low resistive conductive layer (not illustrated). An example of such a multilayered structure may include a double layer of a chromium or molybdenum (alloy) lower layer and an aluminum (alloy) upper layer, or a triple layer of a molybdenum (alloy) lower layer, an aluminum (alloy) middle layer, and a molybdenum (alloy) upper layer.

A first passivation layer 180a is formed on the data conductors (data line 171, source electrode 173, and drain electrode 175) and the exposed semiconductor layer 154 which is not covered by the source electrode 173 and the drain electrode 175. The first passivation layer 180a may include an inorganic insulator such as a silicon nitride (SiNx) and a silicon oxide (SiOx).

A second passivation layer 180b may be formed on the first passivation layer 180a. The second passivation layer 180b may include an inorganic insulator such as a silicon nitride (SiNx) and a silicon oxide (SiOx), or an organic insulator. The second passivation layer 180b may be formed of the organic material thickly thereby reducing or removing a step for planarization.

A contact hole 185 may be formed to extend through the first passivation layer 180a and the second passivation layer 180b. A common electrode 270 is disposed on the second passivation layer 180b. The common electrode 270 may be formed on substantially the entire surface of the substrate 110 as a single unitary and continuous structure, or alternatively may be formed over only a portion of substrate 110 in any desired shape when viewed in plan view. The common electrode 270 includes an opening 138 that overlaps the gate line 121 and the data line 171. Further, one common electrode formed at a first pixel may be connected to another common electrode formed at a second pixel that is adjacent to the first pixel. Multiple common electrodes 270 may be connected to each other to each receive a common voltage having a predetermined magnitude supplied from outside of a display area.

An interlayer insulating layer 180c, made of an organic insulating material or an inorganic insulating material, may be disposed on the common electrode 270.

A pixel electrode 191 is disposed on the interlayer insulating layer 180c. The pixel electrode 191 includes a plurality of cutouts 91 and a plurality of branch electrodes 192 disposed between adjacent cutouts 91.

In the present exemplary embodiment, the pixel electrode 191 is disposed in each of a first pixel R for displaying red, a second pixel G for displaying green, and a third pixel B for displaying blue. A first width w1 of a plurality of first branch electrodes 192 disposed in the first pixel R is equal to or smaller than a second width w2 of a plurality of second branch electrodes 192 disposed in the second pixel G, and a third width w3 of a plurality of third branch electrodes 192 disposed in the third pixel B is smaller than the second width w2 of the second branch electrodes 192 disposed in the second pixel G. That is, w1 ≤ w2, and w3 < w2. A first distance s1 between the first branch electrodes 192 disposed in the first pixel R, a second distance s2 between the second branch electrodes 192 disposed in the second pixel G, and a third distance s3 between the third branch electrodes 192 disposed in the third pixel B may be the same, i.e. s1 = s2 = s3.

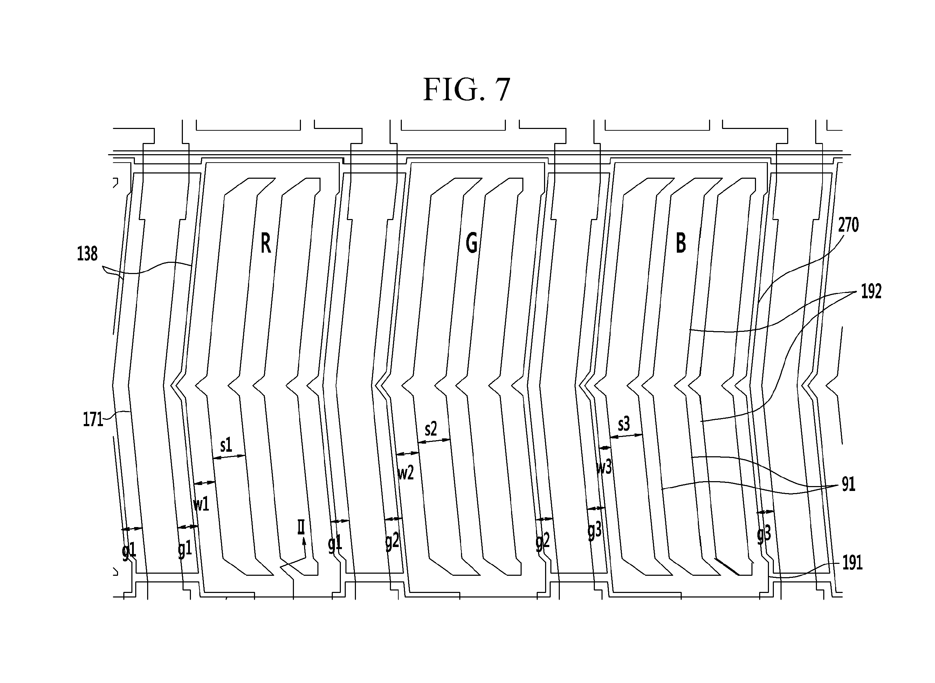

A structure and a design of the branch electrodes 192 of each pixel in the liquid crystal display according to the present exemplary embodiment will be described in detail below with reference to FIG. 7 to FIG. 10.

The first protection layer 180a, the second protection layer 180b, and the interlayer insulating layer 180c have a contact hole 185 formed therethrough to expose the drain electrode 175. The pixel electrode 191 is physically and electrically connected to the drain electrode 175 through the first contact hole 185 to receive a voltage from the drain electrode 175.

The pixel electrode 191 may generate a horizontal electric field together with the common electrode 270. The pixel electrode 191 and the common electrode 270 have different voltages applied to them, so as to together generate an electric field such that liquid crystal molecules 310 positioned thereon are rotated in a direction parallel to the direction of the electric field. As such, according to the determined rotation direction of the liquid crystal molecules, the polarization of light passing through the liquid crystal layer is changed.

According to the liquid crystal display of the shown exemplary embodiment, the common electrode 270 has a unitary and continuous shape (e.g., at least substantially a rectangle in plan view) while the pixel electrode 191 has a plurality of branch electrodes. However, according to a liquid crystal display of another exemplary embodiment of the present invention, the pixel electrode 191 instead may have a unitary and continuous shape and the common electrode 270 may have a plurality of branch electrodes.

Alternatively, the common electrode 270 may be disposed on the interlayer insulating layer 180c and the pixel electrode 191 may be disposed below the interlayer insulating layer 180c.

The common electrode 270 and the pixel electrode 191 may be made of the transparent conductive material such as ITO or IZO.

A lower alignment layer 11 is formed on the pixel electrode 191. The lower alignment layer 11 is a liquid crystal alignment layer made of a material such as polyamic acid, polysiloxane, polyimide, or the like, and may include at least one of generally used materials. Further, the lower alignment layer 11 may be a photoalignment material.

An upper alignment layer 21 is disposed in a portion facing the lower alignment layer 11, and a microcavity 305 is formed between the lower alignment layer 11 and the upper alignment layer 21. That is, microcavity 305 is formed with lower alignment layer 11 on its lower surface and upper alignment layer 21 on its upper surface. A liquid crystal material including the liquid crystal molecules 310 is injected in a plurality of microcavities 305. In this manner, the lower and upper alignment layers 11, 21 contact lower and upper surfaces, respectively, of the liquid crystal layer 310.

A light blocking member 220 is disposed on the pixel electrode 191 to cover a region where the thin film transistor Q is formed. The light blocking member 220 according to the present exemplary embodiment may be formed along a direction in which the gate line 121 extends. The light blocking member 220 may be formed of a material that blocks light.

An insulating layer 181 may be formed on the light blocking member 220, and the insulating layer 181 covering the light blocking member 220 may extend onto the pixel electrode 191. The insulating layer 181 may be formed of a silicon nitride (SiNx) or a silicon oxide (SiOx).

The lower alignment layer 11 formed on the pixel electrode 191 may be a vertical alignment layer. The lower alignment layer 11, as a liquid crystal alignment layer made of a material such as polyamic acid, polysiloxane, polyimide, or the like, may include at least one of generally used materials. Further, the lower alignment layer 11 may be a photoalignment layer.

The upper alignment layer 21 is disposed in a portion facing the lower alignment layer 11, and the microcavity 305 is formed between the lower alignment layer 11 and the upper alignment layer 21. The liquid crystal material, including the liquid crystal molecules 310, is injected into the microcavity 305, through an entrance region 307. The microcavities 305 may be formed along a column direction of the pixel electrode 191, that is, in the vertical direction. In the present exemplary embodiment, the alignment material forming the alignment layers 11 and 21 and the liquid crystal material including the liquid crystal molecules 310 may be injected into the microcavity 305 by using capillary force. In the present exemplary embodiment, the lower alignment layer 11 and the upper alignment layer 21 are merely distinguished according to position, and may be connected to each other as shown as in FIG. 3. The lower alignment layer 11 and the upper alignment layer 21 may thus be simultaneously formed.

The microcavity 305 is divided in the vertical direction by a plurality of liquid crystal injection portions 307FP positioned at regions overlapping the gate line 121, thereby forming the plurality of microcavities 305, and a plurality of microcavities 305 may be formed along (i.e. with a major axis extending in) a column direction of the pixel electrode 191, that is, in the vertical direction in the view of FIG. 1. Further, each microcavity 305 is divided in the horizontal direction by a partition portion PWP that will be described later, thereby forming a plurality of microcavities 305, and multiple microcavities 305 may be placed adjacent to each other along the row direction of the pixel electrode 191, that is, the horizontal direction in which the gate line 121 extends.

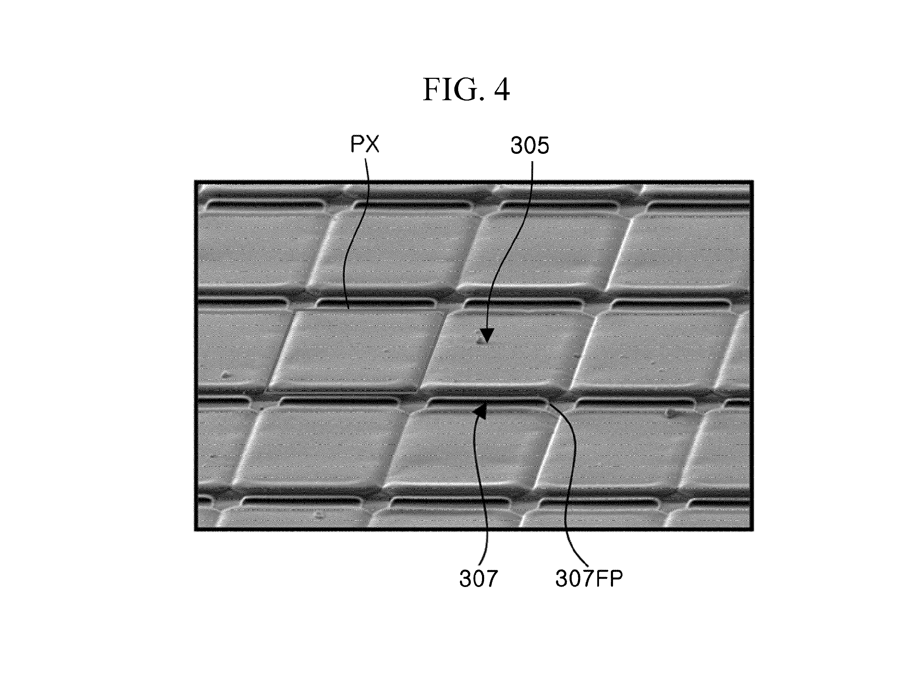

FIG. 4 is a schematic perspective view illustrating a microcavity of a liquid crystal display according to an exemplary embodiment of the present invention.

As shown in FIG. 4, each of a plurality of microcavities 305 may correspond to one pixel area. One pixel area serves as a minimum unit representing contrast, and may correspond to one screen display area. However, the present invention is not limited thereto. For example, each of the microcavities 305 may alternatively correspond to two or more pixel areas.

A lower insulating layer 350 is positioned on the upper alignment layer 21. The lower insulating layer 350 may be formed of a silicon nitride (SiNx) or a silicon oxide (SiOx).

A roof layer is positioned on the lower insulating layer 350. In the present exemplary embodiment, the roof layer may be formed of a color filter 230. As shown in FIG. 3, color filters 230 of one color form the partition portion PWP. The partition portion PWP is disposed between microcavities 305 that are adjacent to each other in the horizontal direction. The partition portion PWP is a portion filling the space between two microcavities 305 that are adjacent to each other in the horizontal direction. As shown in FIG. 3, the partition portion PWP completely fills the separation space of the microcavity 305, however the invention is not limited thereto, and the partition portion PWP may alternatively only partially fill the separation space. The partition portion PWP may be formed along the direction in which the data line 171 extends, while overlapping the data line 171.

The color filters 230 neighboring each other on the partition portion PWP may overlap, as in FIG. 3. The boundary surface where the neighboring color filters 230 meet each other may be positioned at the portion corresponding to the partition portion PWP. That is, the boundary surface between neighboring color filters 230 may lie over the corresponding partition portion PWP.

In the present exemplary embodiment, the color filter 230 and the partition portion PWP serve to support the microcavity 305 to maintain the shape thereof.

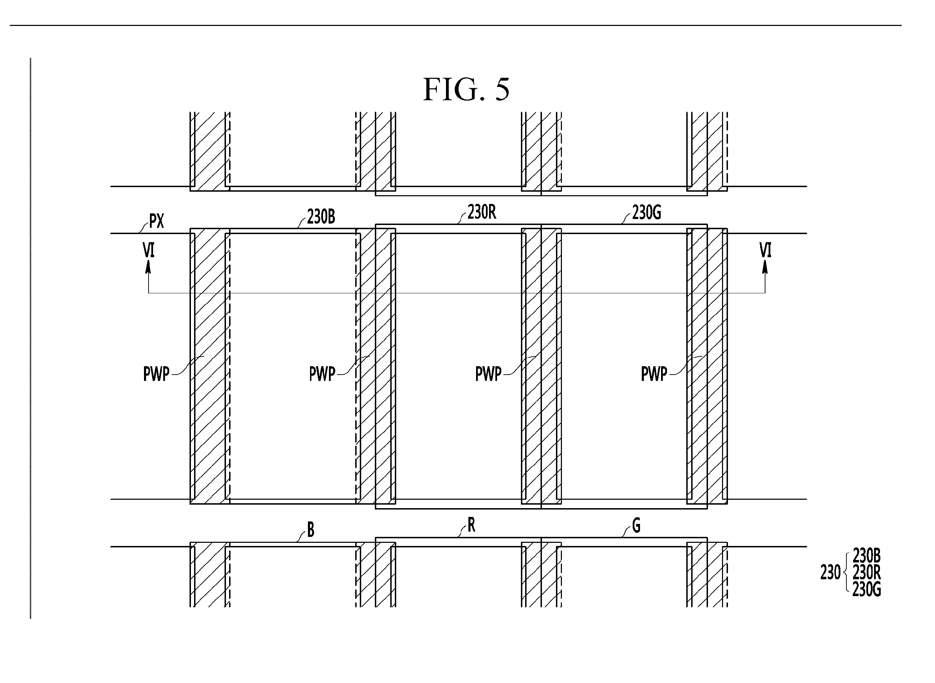

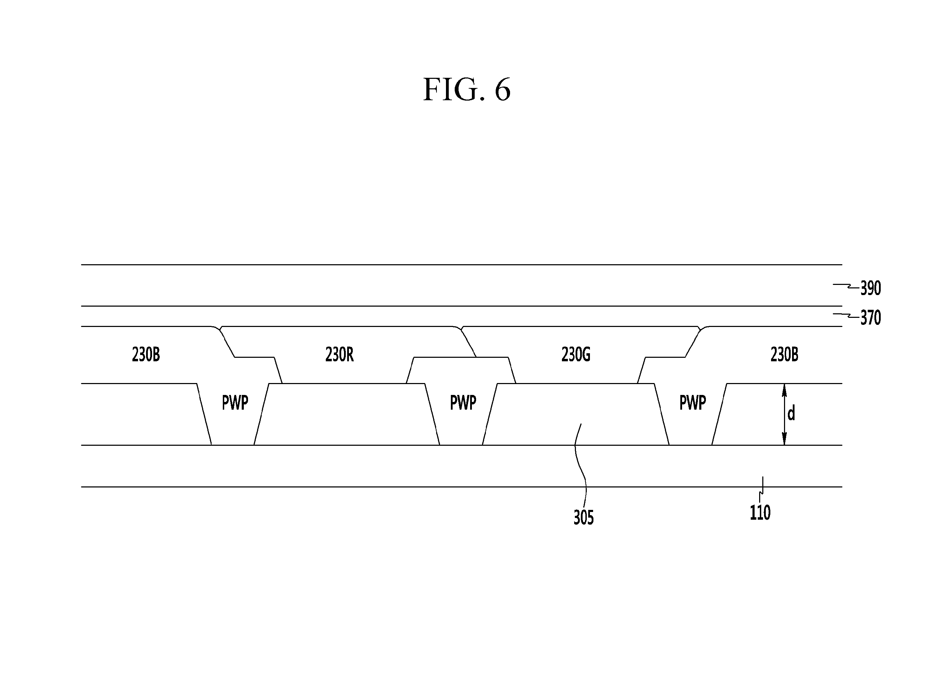

Hereafter, the color filter 230 according to an exemplary embodiment of the present invention will be described with reference to FIG. 5 and FIG. 6.

FIG. 5 is a top plan view illustrating a color filter and a partition portion in a liquid crystal display according to an exemplary embodiment of the present invention. FIG. 6 is a cross-sectional view taken along the line VI-VI of FIG. 5.

FIG. 5 and FIG. 6 are views to schematically explain the color filter and the partition portion in the liquid crystal display according to an exemplary embodiment of the present invention, where many constituent elements are already described in connection with FIG. 1 to FIG. 4.

Referring to FIG. 5 and FIG. 6, the color filter 230 according to the present exemplary embodiment includes a first color filter, a second color filter, and a third color filter. The first color filter may include a blue color filter 230B, the second color filter may include a red color filter 230R, and the third color filter may include a green color filter 230G.

According to the present exemplary embodiment, and as can be recognized by one of ordinary skill in the art, the partition portion PWP is formed by any one among the first color filter, the second color filter, and the third color filter. In an exemplary embodiment of the present invention, the first color filter corresponding to the blue color filter 230B forms the partition portion PWP. The blue color filter 230B may include the partition portion PWP extended from the portion corresponding to the pixel area PX and the partition PWP positioned between the red color filter 230R and the green color filter 230G. In this case, the red color filter 230R and the green color filter 230G are adjacent to each other, and may each overlap their partition portion PWP.

Instead of the blue color filter 230B, it is possible to form partition portion PWP of the red color filter 230R or the green color filter 230G. However, the blue color filter 230B has a larger light blocking effect compared with the red color filter 230R or the green color filter 230G, and thus provides the benefit of reducing reflection of light to a greater degree. In addition, the blue color filter 230B has excellent fluidity of a photoresist of the color filter, thereby obtaining a good taper angle. Accordingly, the end of the color filter can be made to be slanted at an angle of more than about 45 degrees, so that the color filter overlapping the partition portion PWP may be well formed.

As shown in FIG. 5, the color filter 230 may be formed to have an island shape to correspond to the pixel area PX.

The present invention is not limited to the aforementioned exemplary embodiment. For example, color filters 230 which are adjacent to each partition portion PWP may form that partition portion PWP.

Referring to FIG. 6, the cell gap d of each of the first pixel R, the second pixel G, and the third pixel B may be the same.

Again referring to FIG. 2 and FIG. 3, an upper insulating layer 370 is disposed on the color filter 230. The upper insulating layer 370 may be formed of silicon nitride (SiNx) or silicon oxide (SiOx). As shown in FIG. 2, the side surface of each color filter 230 may be covered by the upper insulating layer 370.

A capping layer 390 is positioned on the upper insulating layer 370. The capping layer 390 is also positioned at the liquid crystal injection portion 307FP. The capping layer 390 may include an organic material, an inorganic material, water, or a soluble polymer material.

In the present exemplary embodiment, as shown in FIG. 3, the partitions PWP are all formed using a single-colored material of the color filters 230. The partition portions PWP can partition or define the microcavities 305 by forming partition walls. In the present exemplary embodiment, a partition structure such as the partition portions PWP is disposed between the microcavities 305. Accordingly, even though the substrate 110 is bent, less stress may be generated and a degree at which the cell gap is deformed may be reduced.

FIG. 7 is a top plan view illustrating a part of the liquid crystal display of FIG. 1.

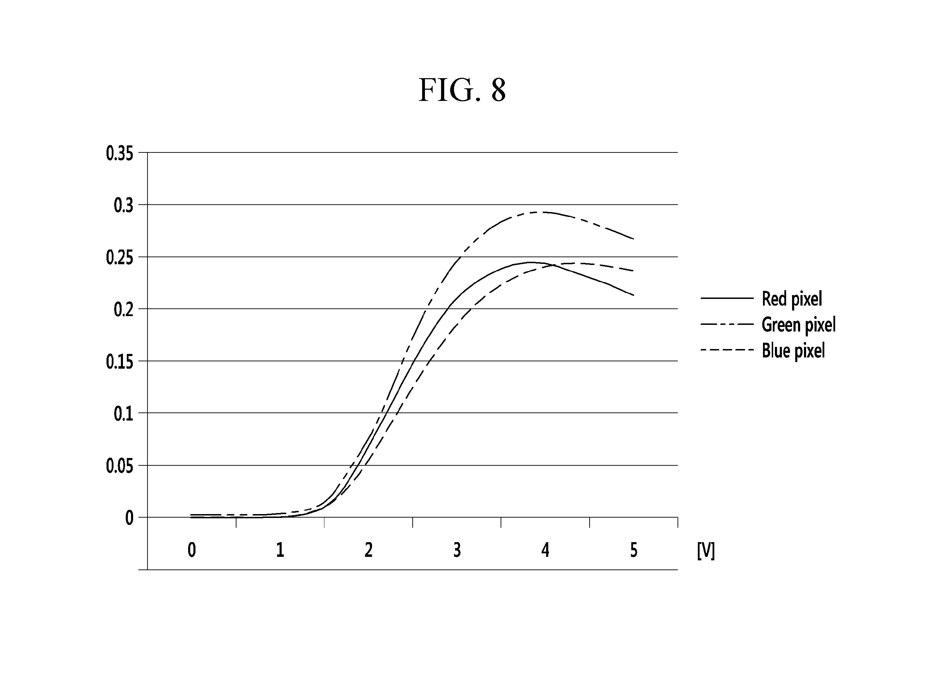

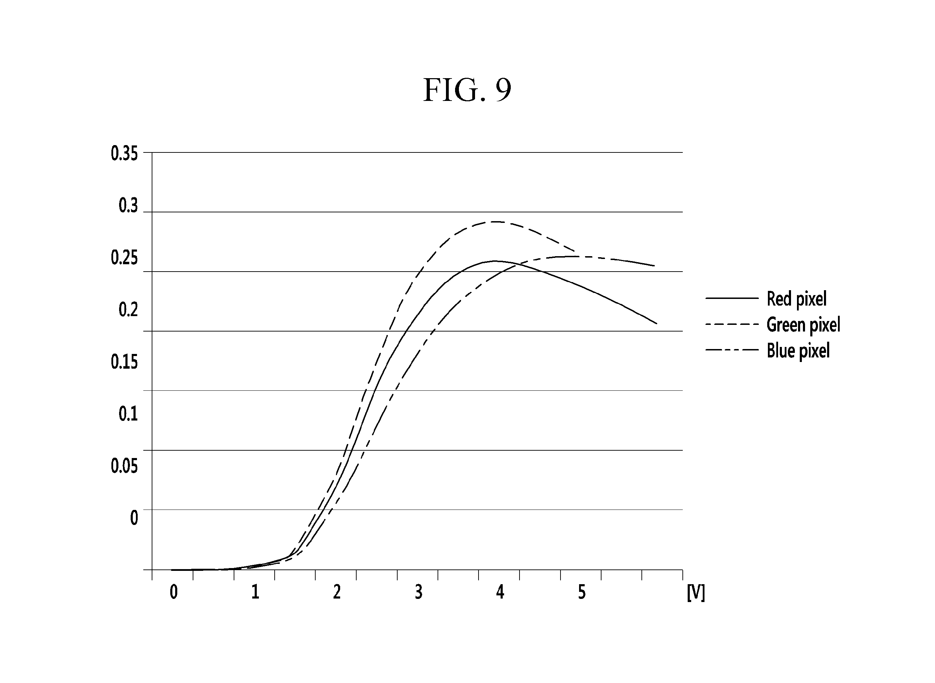

Referring to FIG. 7, both the first width w1 of the first branch electrodes 192 disposed in the first pixel R and the third width w3 of the third branch electrodes 192 disposed in the third pixel B are smaller than the second width w2 of the second branch electrodes 192 disposed in the second pixel G. For example, the ascending order of width size may be determined as the order of the third width w3, the first width w1, and the second width w2. That is, w3 < w1 < w2. The reason that the width w3 is designed to be relatively small will be described with reference to FIG. 8 and FIG. 9.

FIG. 8 is a graph illustrating transmittance of a red pixel, a green pixel, and a blue pixel according to a voltage in a conventional liquid crystal display. FIG. 9 is a graph illustrating transmittance of a red pixel, a green pixel, and a blue pixel according to a voltage in a liquid crystal display according to an exemplary embodiment of the present invention.

Referring to FIG. 8, since wavelengths of the red pixel, the green pixel, and the blue pixel are different from each other, their refractive indexes are also different from each other, thereby resulting in different transmittances. As compared with the green pixel, the maximum transmittance of each of the red pixel and the blue pixel is relatively low. For example, the maximum transmittances of the red pixel and the blue pixel are respectively reduced by about 18 and 17 % as compared with the green pixel. Accordingly, visibility may be reduced in the red pixel and the blue pixel.

Conventionally, to reduce such transmittance difference, the thicknesses of the color filters are adjusted to differentiate their cell gaps, thereby controlling their transmittances. However, when the color filters are formed on microcavities 305, it is difficult to adjust the cell gaps by using the thicknesses of the color filters.

For example, in a simulation result measuring transmittance variation by changing the width w3 of the branch electrodes 192 in a range of 1.5 µm to 4.0 µm in a state in which the value of distance s3 between the branch electrodes 192 in a third pixel B maintains a constant distance, it is seen that the transmittance is reduced as the width of the branch electrodes 192 is increased. In view of this result, in the liquid crystal display according to the present exemplary embodiment, as a result of minimizing the width of the branch electrodes 192 of the blue pixel in a state in which the value of distance s2 between the branch electrodes 192 for a second pixel G maintains a constant distance, the transmittance of the blue pixel is improved. The red pixel accomplishes substantially the same simulation result as that of the blue pixel.

The transmittance gap between B and G pixels can be reduced by designing the width of the third branch electrodes 192 of the B pixels to be relatively small, i.e. on the lower end of the 1.5 µm to 4.0 µm range. Accordingly, it is possible to improve color visibility.

According to the present exemplary embodiment, each of the red pixel R and the green pixel G may include 3 branch electrodes 192, and the blue pixel B may include 4 branch electrodes 192. As above, it has been shown that it is possible to improve the transmittance by increasing the number of branch electrodes 192 of the blue pixel B. In this case, the transmittance difference between the red pixel R and the green pixel G can be reduced by increasing the number of branch electrodes 192 of the red pixel R. When the number of branch electrodes 192 of the blue pixel B is increased, a third distance g3 between the pixel electrode 191 of pixel B and its data line 171 may be shortened as compared with a first distance g1 of the red pixel R and a distance g2 of the green pixel G. In this case, the pixel electrode 191 of the blue pixel B may affect the green pixel G or the red pixel R, thereby undesirably reducing visibility or transmittance. However, in the liquid crystal display according to the present exemplary embodiment, as shown in FIG. 3, no liquid crystal exists on the data line 171. Accordingly, although the distance to the branch electrode 192 that is nearest its data line 171 is reduced, it is possible to prevent deterioration of visibility or transmittance.

Referring to FIG. 9, as in the exemplary embodiment of the present invention, in the case of designing the width of the branch electrodes of the blue pixel to be relatively narrow, the maximum transmittance of the blue pixels is improved by about 10.4% as compared with that shown in FIG. 8. In addition, in the case of designing the width of the branch electrodes of the red pixel to be relatively narrow as compared with the green pixel, the maximum transmittance of the red pixels is improved by about 6.4% as compared with that shown in FIG. 8. Herein, in the test shown in FIG. 8, the width and the distance of the branch electrodes in each pixel were designed to be the same. In the test shown in FIG. 9, the first width w1, the second width w2, and the third width w3 were respectively designed as 2.0, 2.7, and 1.5 µm, and the first distance s1, the second distance s2, and the third distance s3 were each set at 4.3 µm.

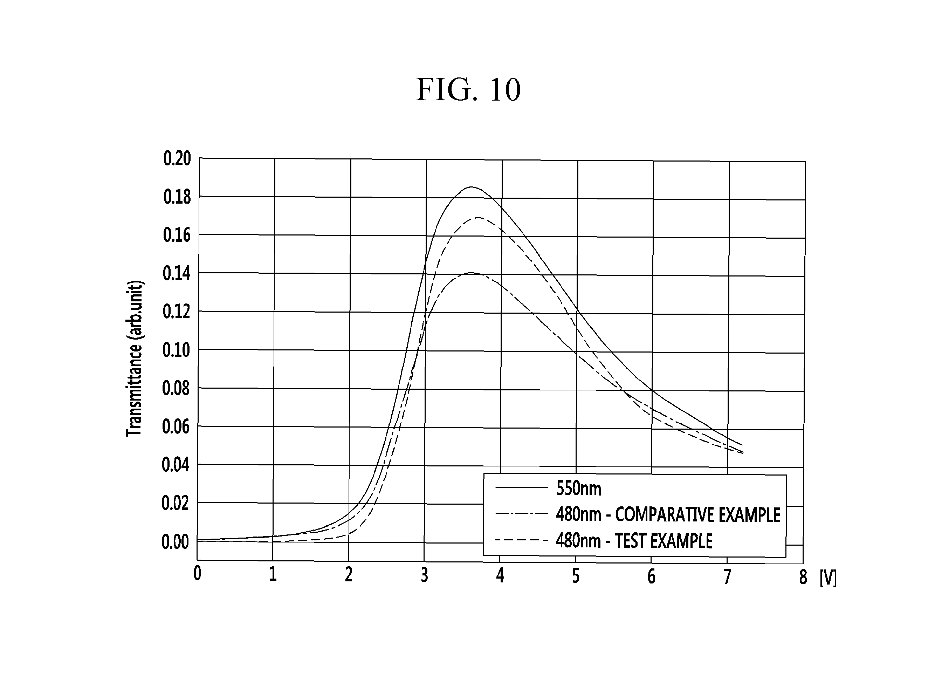

FIG. 10 is a graph illustrating transmittance of a red pixel, a green pixel, and a blue pixel according to a voltage in a liquid crystal display according to an exemplary embodiment of the present invention.

The exemplary embodiment shown in FIG. 10 was realized by constructing and running a display of the present exemplary embodiment in an in-plane switching (IPS) mode, in which both of the pixel electrode 191 and the common electrode 270 were formed to have substantially linear branch electrodes, unlike the planar-shaped common electrode 270 of, for example, FIG. 1. Specifically, in test example of Fig. 10, the width and distance of the branch electrodes of the green pixel of a 550 nm wavelength band were respectively designed as 3 µm and 4 µm. The width and distance of the branch electrodes of the blue pixel of the 480 nm wavelength band were respectively designed as 2 µm and 4 µm. In a comparative example, the width and distance of the branch electrodes of the blue pixel of a 480 nm wavelength band were designed with the same values as those of the green pixel in test example.

Referring to FIG. 10, it is seen that the transmittance in the test example is improved to 0.17 as compared with the comparative example having the transmittance of 0.14.

The color filter 230 is formed on the microcavity 305 in the aforementioned exemplary embodiment, but embodiments of the invention are not limited thereto. For example, the structure and design of the branch electrodes 192 according to the exemplary embodiment of the present invention may also be applied to a structure in which the color filter 230 is disposed below the microcavity 305.

Further, embodiments of the invention have been described in connection with liquid crystal displays employing microcavities. However, one of ordinary skill in the art will realize that the structure and design of the branch electrodes 192 according to the exemplary embodiments of the present invention may also be applied to any other type and construction of liquid crystal display as well.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims. Any and all features of the various embodiments, disclosed or otherwise, may be mixed and matched in any manner, so as to create further embodiments also encompassed by the invention.

## Claims

1. A liquid crystal display comprising:
a substrate (110) configured to include a first pixel (R), a second pixel (G), and a third pixel (B);
pixel electrodes (191) disposed in each of the first pixel (R), the second pixel (G), and the third pixel (B); and
a roof layer disposed to face the pixel electrodes (191),
wherein a plurality of microcavities (305) are formed between the pixel electrodes (191) and the roof layer, the microcavities (305) each having a liquid crystal layer including a liquid crystal material,
wherein the pixel electrodes (191) each include a plurality of branch electrodes (192),
wherein a width (w3) of a third branch electrode (192) disposed in the third pixel (B) is smaller than that of a second branch electrode (192) disposed in the second pixel (G).

2. The liquid crystal display of claim 1, wherein the number of the branch electrodes (192) disposed in the third pixel (B) is greater than that of the branch electrodes (192) disposed in either the first pixel (R) or the second pixel (G).

3. The liquid crystal display of claim 2, further comprising
a data line (171) disposed between adjacent pixels of the first pixel (R), the second pixel (G), and the third pixel (B),
wherein a shortest distance (g3) between the third pixel (B) and the data line (171) adjacent thereto is shorter than that between the second pixel (G) and the data line (171) adjacent thereto.

4. The liquid crystal display of one of claims 1 to 3, wherein a width (w3) of the third branch electrode (192) is less than a width (w1) of a first branch electrode (192) disposed in the first pixel (R), and the width (w1) of the first branch electrode (192) is less than a width (w2) of the second branch electrode (192),
wherein the first pixel (R), the second pixel (G), and the third pixel (B) are configured to respectively display red, green, and blue.

5. The liquid crystal display of one of claims 1 to 4, wherein a distance (s1) between adjacent ones of the first branch electrodes (192) is substantially the same as a distance (s2) between adjacent ones of the second branch electrodes (192), and is substantially the same as a distance (s3) between adjacent ones of the third branch electrodes (192).

6. The liquid crystal display of one of claims 1 to 5, wherein the roof layer includes color filters (230).

7. The liquid crystal display of claim 6, wherein adjacent microcavities (305) are separated from each other by a partition portion (PWP), and the partition portion (PWP) is formed by a color filter (230) of a single color.

8. The liquid crystal display of claim 7, wherein the partition portion (PWP) is disposed to overlap a data line (171).

9. The liquid crystal display of claim 1, wherein a width (w1) of a first branch electrode (192) disposed in the first pixel (R) is equal to or less than that of the second branch electrode (192) disposed in the second pixel (G).

10. The liquid crystal display of one of claims 1 to 9, wherein adjacent microcavities (305) are partitioned by a partition portion (PWP), and the partition portion (PWP) is formed by the roof layer.

11. The liquid crystal display of one of claims 1 to 10, further comprising a common electrode (270), wherein an insulating layer (181) is disposed between the pixel electrodes (191) and the common electrode (270).

12. The liquid crystal display of claim 11, wherein the common electrode (270) is substantially planar, and is disposed to overlap the branch electrodes (192).

13. The liquid crystal display of one of claims 1 to 12, wherein cell gaps of the liquid crystal layer are substantially the same in each of the first pixel (R), the second pixel (G), and the third pixel (B).
